# EUROPEAN PATENT APPLICATION

(11) **EP 3 089 458 A1**
(43) Date of publication of application: **02.11.2016**
(21) Application number: 14873137.5
(22) Date of filing: 25.12.2014
(51) Int. Cl.: H04N 21/262, G06F 13/00, H04N 21/2183

(54) **CONTENT DISTRIBUTION DEVICE, CONTENT DISTRIBUTION SYSTEM, CONTENT DISTRIBUTION METHOD, AND PROGRAM**

(30) Priority: 25.12.2013 JP 2013266738
(71) Applicant: NEC Corporation, Tokyo 108-8001 (JP)
(72) Inventor: SUMIYOSHI Yasuaki, Tokyo 108-8001 (JP)
(74) Representative: Betten & Resch
(86) International application number: PCT/JP2014/084265
(87) International publication number: WO 2015/099020

(57) **Abstract**

A content distribution device includes: a content acquisition unit that acquires a content to be accessed based on a access request transmitted from an access request source, the content to be accessed being indicated by the access request; an encoding unit that encodes the acquired content, a content distribution unit that distributes the encoded content to the access request source; and a content transfer unit that transfers the encoded content to a high-speed distribution device in a case where access frequency to the encoded content is higher than a threshold, the high-speed distribution device exclusively distributing a content and being independent of the content distribution device.

## Description

### TECHNICAL FIELD

The present invention relates to a content distribution device, a content distribution system, a content distribution method, and a program.

### BACKGROUND ART

As contents to be provided on the Internet, other than character data there are multimedia contents such as motion pictures and images. These multimedia contents generally have a large data size as compared with Web contents to be provided in the form of text data. Consequently, in many cases, the storage device that stores data for distribution of the contents becomes expensive. Patent Document 1 discloses a technique in which, in a distribution server device that sells contents composed mainly of images such as electronic books, content having a high access frequency is stored in an expensive storage device having a fast data transfer rate, and content having a low access frequency is stored in an inexpensive storage device having a slow data transfer rate. According to this technique, a distribution system having good efficiency as a whole is constructed at low cost.

Regarding motion picture data, for example, not only is storage of data costly because the file size is too large, but also the data amount on its own is too large and hence it is not suitable for distribution via a network. Therefore, in general a process of reducing data to decrease the file size is performed with respect to the motion picture data, to the extent that image quality of the picture does not change. This process is referred to as an encoding process.

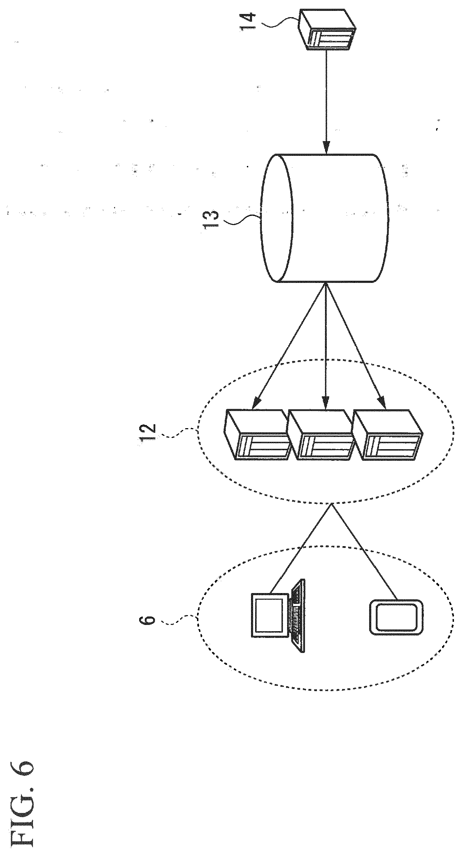

Here a general motion picture distribution system is described with reference to FIG. 6. In the general motion picture distribution system, an encoder device 14 performs an encoding process of the motion picture data to be distributed, and stores a motion picture file that has been subjected to the encoding process, in a storage device 13. A plurality of distribution server devices 12 are connected to the storage device 13. If there is an access request to a motion picture from a user terminal device 6, any one of the distribution server devices 12 receives the request. The distribution server device 12 that has received the request searches for the requested motion picture data in the storage device 13, and distributes the motion picture content according to a predetermined method.

Next is a description of distribution of the motion picture file in a cache system in which a telecommunications carrier or the like stores a cache of contents to decrease the band load of a communication network in a massive gateway system, and appropriate content is returned, matched with the device. This gateway system performs distribution with respect to requests to all unspecified contents on the Internet, from large scale unspecified devices.

As described above, the data amount of the motion picture data is enormous. Consequently, the telecommunications carrier caches the motion picture data in the distribution server device on the gateway system as much as possible, to prevent a situation where the same motion picture data is distributed frequently from the server device being the distributor, in order to reduce the traffic amount flowing in the communication network as much as possible. In such a system, if the motion picture file that has been subjected to the encoding process, which is distributed by a motion picture content providing device, is distributed as it is, the motion picture file places a burden on the network band. Therefore, the motion picture file is re-encoded at a higher compression rate in some cases.

### [Prior Art Documents]

### [Patent Documents]

[Patent Document 1] Japanese Unexamined Patent Application, First Publication No. 2010-152729

### SUMMARY OF THE INVENTION

### Problem to be Solved by the Invention

When the distribution system described with reference to FIG. 6 is applied to a gateway system environment in which an unspecified large number of contents are to be distributed, there are problems as described below. First, even if a storage device having a large memory capacity is introduced, all the motion picture contents on the Internet cannot be stored. Moreover, it is not realistic to introduce such a number of storage devices that can store all the motion picture contents. Therefore, it is considered to store only a part of the motion picture contents having a large number of accesses in the storage device 13 as shown in FIG. 6. However, even if a storage device 13 having a large memory capacity and fast data transfer rate is introduced and the encoded motion picture file is accumulated in the storage device 13, if access concentration occurs, content distribution exceeding the performance limit of the storage device 13 cannot be performed. Particularly, because the data amount of the motion picture content is large, if access concentration occurs, data transfer from the storage device 13 to the distribution server device 12 is likely to be a bottleneck. Moreover, if in order to go beyond the performance limit, a plurality of storage devices 13 is installed and configured to spread the accesses, the cost required for the system increases. The problem with the arrangement method of the motion picture file by the method described in Patent Document 1 is the same.

The motion picture distribution system using these storage devices 13 is not cost effective and not suitable for a system required by the telecommunications carrier such as one in which there is no limit to the contents, there is a large amount of access thereto, and non-distribution is unacceptable.

An exemplary object of the present invention is to provide a content distribution device, a content distribution system, a content distribution method, and a program that solve the above problems.

### Means of Solving the Problems

The present invention has been achieved in order to solve the above-described problems.

A content distribution device according to an exemplary aspect of the present invention includes: a content acquisition unit that acquires a content to be accessed based on a access request transmitted from an access request source, the content to be accessed being indicated by the access request; an encoding unit that encodes the acquired content; a content distribution unit that distributes the encoded content to the access request source; and a content transfer unit that transfers the encoded content to a high-speed distribution device in a case where access frequency to the encoded content is higher than a threshold, the high-speed distribution device exclusively distributing a content and being independent of the content distribution device.

A content distribution method according to an exemplary aspect of the present invention includes: acquiring a content to be accessed based on a access request transmitted from an access request source, the content to be accessed being indicated by the access request; encoding the acquired content; distributing the encoded content to the access request source; and transferring the encoded content to a high-speed distribution device in a case where access frequency to the encoded content is higher than a threshold, the high-speed distribution device exclusively distributing a content and being independent of the content distribution device.

A program according to an exemplary aspect of the present invention causes a computer of a content distribution device to execute: acquiring a content to be accessed based on a access request transmitted from an access request source, the content to be accessed being indicated by the access request; encoding the acquired content; distributing the encoded content to the access request source; and transferring the encoded content to a high-speed distribution device in a case where access frequency to the encoded content is higher than a threshold, the high-speed distribution device exclusively distributing a content and being independent of the content distribution device.

A content distribution system according to an exemplary aspect of the present invention includes: a content distribution device; and a high-speed distribution device that exclusively distributes a content and is independent of the content distribution device. The content distribution device includes: a content acquisition unit that acquires a content to be accessed based on a access request transmitted from an access request source, the content to be accessed being indicated by the access request; an encoding unit that encodes the acquired content; a content distribution unit that distributes the encoded content to the access request source; and a content transfer unit that transfers the encoded content to the high-speed distribution device in a case where access frequency to the encoded content is higher than a threshold. The high-speed distribution device distributes the encoded content transferred from the content distribution device.

### Effect of the Invention

According to an exemplary embodiment of the present invention, a content distribution system having good distribution performance at low cost can be acquired.

### BRIEF DESCRIPTION OF THE DRAWINGS

FIG. 1 is a diagram showing a configuration of a content distribution device according to a first exemplary embodiment of the present invention.
FIG. 2 is a diagram showing a specific configuration of the content distribution device according to the first exemplary embodiment of the present invention.
FIG. 3 is a diagram showing an outline of a network system including the content distribution device according to the first exemplary embodiment of the present invention.
FIG. 4 is a diagram showing an example of a table to be used by a management device according to the first exemplary embodiment of the present invention.
FIG. 5 is a diagram showing a process flow of the content distribution device according to the first exemplary embodiment of the present invention.
FIG. 6 is a diagram for explaining a content distribution system according to a related art.

### EMBODIMENTS FOR CARRYING OUT THE INVENTION

### <First exemplary embodiment>

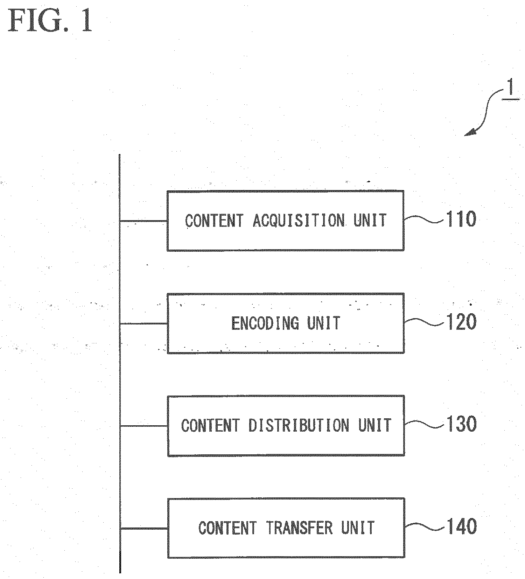

Hereunder, a content distribution device according to a first exemplary embodiment of the present invention is described with reference to FIG. 1 to FIG. 5.

FIG. 1 shows a configuration of a content distribution device 1 according to the first exemplary embodiment of the present invention.

As shown in FIG. 1, the content distribution device 1 includes at least a content acquisition unit 110, an encoding unit 120, a content distribution unit 130, and a content transfer unit 140.

The content acquisition unit 110 acquires motion picture contents (motion picture data) from an access destination indicated by an access request of a user terminal device 6. The content acquisition unit 110 outputs the motion picture data to the encoding unit 120 and the content distribution unit 130.

The encoding unit 120 re-encodes the acquired motion picture data and stores the motion picture data in a memory unit. Re-encoding means to decode a content encoded in a content distributing server device according to a first encoding method, and then re-encode the content according to a second encoding method having a high compression rate. Re-encoding is a process having a high CPU load. The target to be re-encoded is not limited to the motion picture contents, and can be a still image or voice data.

The content distribution unit 130 distributes the motion picture data acquired by the content acquisition unit 110, to an access request source. When the re-encoded motion picture data has been already stored in the memory unit, the content distribution unit 130 reads out the data from the memory unit and distributes the data to the user terminal device 6.

The content transfer unit 140 acquires identification information of the motion picture data having high access frequency, from a management device 3. Moreover, the content transfer unit 140 reads out the motion picture data from the memory unit, and transfers the motion picture data to a high-speed distribution device 2 that exclusively distributes contents.

The content acquisition unit 110, the encoding unit 120, the content distribution unit 130, and the content transfer unit 140 are functions provided in the content distribution device 1, which are obtained by a CPU (Central Processing Unit) provided in the content distribution device 1 executing a program.

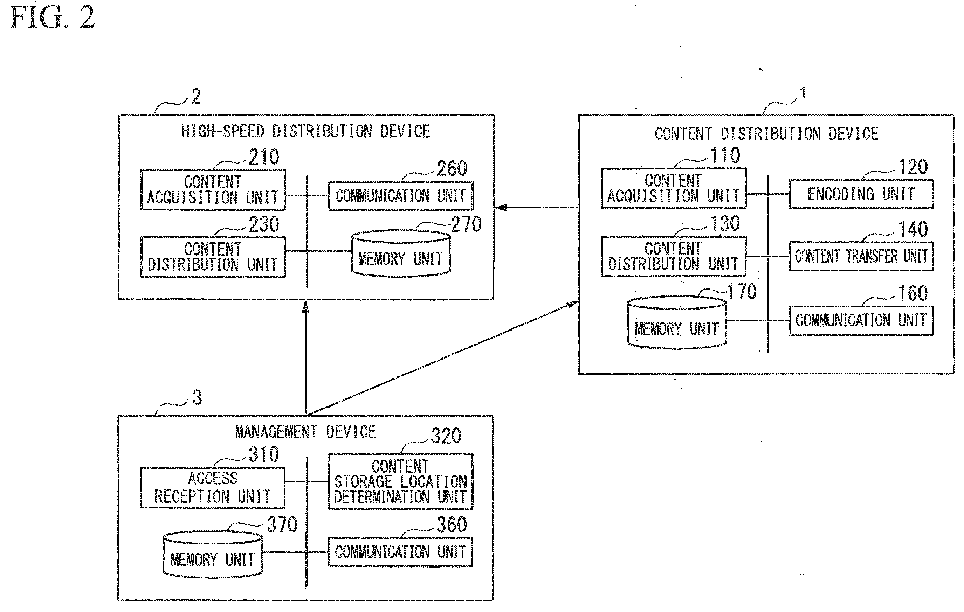

FIG. 2 is a diagram showing a specific configuration of the content distribution device 1 according to the first exemplary embodiment of the present invention.

The content distribution device 1, the high-speed distribution device 2, and the management device 3 are described with reference to FIG. 2. The content distribution device 1 and the high-speed distribution device 2 are independent of each other.

First, functional units other than the functional units described in FIG. 1 for the content distribution device 1 will be described.

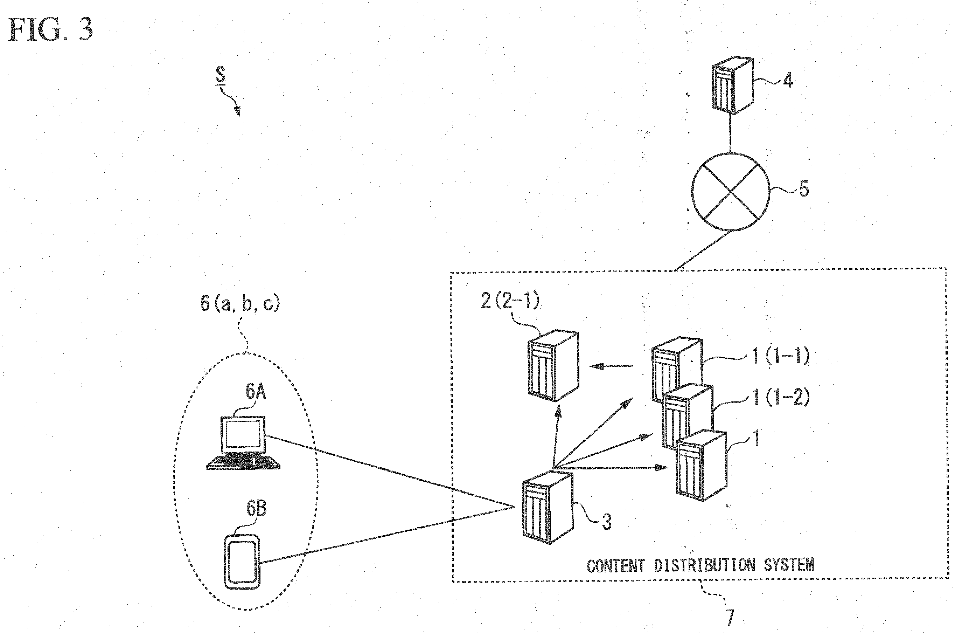

A communication unit 160 performs transmission and reception of data with the high-speed distribution device 2 and the management device 3. Moreover, the communication unit 160 performs transmission and reception of data with a content distributing server device 4 and the user terminal device 6 (refer to FIG. 3).

A memory unit 170 stores re-encoded motion picture data.

Next, the high-speed distribution device 2 is described. As shown in FIG. 2, the high-speed distribution device 2 includes at least a content acquisition unit 210, a content distribution unit 230, a communication unit 260, and a memory unit 270.

The content acquisition unit 210 acquires the re-encoded motion picture data from the content distribution device 1, and stores the motion picture data in the memory unit 270.

The content distribution unit 230 reads out the motion picture data from the memory unit 270, and distributes the motion picture data to the user terminal device 6, being the access request source.

The communication unit 260 performs transmission and reception of data with the content distribution device 1 and the management device 3. Moreover, the communication unit 260 performs transmission and reception of data with the user terminal device 6 (refer to FIG. 3).

The memory unit 270 stores re-encoded motion picture files having high access frequency.

The content acquisition unit 210 and the content distribution unit 230 are functions provided in the high-speed distribution device 2, which are obtained by a CPU provided in the high-speed distribution device 2 executing a program.

Next, the management device 3 is described. As shown in FIG. 2, the management device 3 includes at least an access reception unit 310, a content storage location determination unit 320, an access high-frequency content determination unit 330, a communication unit 360, and a memory unit 370.

The access reception unit 310 receives an access request to the motion picture content from the user terminal device 6. The access reception unit 310 redirects the access from the user terminal device 6 to the appropriate content distribution device 1 according to information that is stored in the memory unit (memory unit 370) provided in the management device 3 and indicates which motion picture data is present in which content distribution device 1 or high-speed distribution device 2. When the information of the storage location of the motion picture data has not been recorded in the memory unit 370, the access reception unit 310 records identification information of the motion picture data of the access destination, terminal information of the access source, and information of the storage location determined by the content storage location determination unit 320, in the memory unit 370. The access reception unit 310 records the number of accesses and the last access time with respect to a combination of the access-requested motion picture data and the terminal information of the access request source, in the memory unit 370. The terminal information is OS information of a terminal of the access source and information indicating software that reproduces the contents.

The content storage location determination unit 320 determines which motion picture data is to be stored in which content distribution device 1. For example, the content storage location determination unit 320 may aggregate the number of accesses to the motion picture data recorded in the memory unit 370 for each storage location device, and determine an arrangement of the motion picture data so that each content distribution device 1 is accessed equally as much as possible, to determine which motion picture file is to be stored in which content distribution device 1. If access to a particular motion picture content is performed a predetermined number of times or more within a predetermined time, the content storage location determination unit 320 determines that the motion picture content is a content having a particularly high access frequency, and instructs the content distribution device 1 to transfer the motion picture data from the content distribution device 1 to the high-speed distribution device 2.

The communication unit 360 performs transmission and reception of data with the content distribution device 1 and the high-speed distribution device 2. Moreover, the communication unit 360 performs transmission and reception of data with the user terminal device 6 (refer to FIG. 3).

The memory unit 370 memorizes a storage location for each motion picture content and for each accessing terminal, and an access rate for each motion picture file and for each of accessing terminal information. Each accessing terminal information means each terminal type of the accessing terminal device. The terminal type is, for example, a type that can be classified depending on a CPU or an OS provided in the respective terminal devices, or the type of software to be used for browsing motion picture contents.

The access reception unit 310 and the content storage location determination unit 320 are functions provided in the management device 3, obtained by a CPU provided in the management device 3 executing a program.

The content distribution device 1, the high-speed distribution device 2, and the management device 3 are, for example, PC servers.

FIG. 3 shows an outline of a network system S including the content distribution device 1 according to the first exemplary embodiment of the present invention.

The outline of the network system S including the content distribution device 1 is described with reference to FIG. 3. There is one or a plurality of content distribution devices 1 and high-speed distribution devices 2 respectively. FIG. 3 shows an example in which there are three content distribution devices 1 and one high-speed distribution device 2. In FIG. 3, one PC terminal device 6A and one mobile terminal device 6B are shown as the user terminal device 6. However, actually, there are a plurality of PC terminal devices 6A and a plurality of mobile terminal devices 6B.

These user terminal devices 6 include a plurality of groups of user terminal devices 6 classified by the same terminal type.

When there is an access request to a motion picture content from the user terminal device 6, the management device 3 receives the access request. The management device 3 acquires information indicating in which device the motion picture file is stored, from the memory unit 370. The management device 3 redirects the access request from the user terminal device 6 (user) to the content distribution device 1 or the high-speed distribution device 2 that holds the motion picture file, based on the information. The content distribution device 1 or the high-speed distribution device 2 reads out the requested motion picture file from the memory unit of the own device and distributes the motion picture to the user terminal device 6, being the request source.

When a motion picture content that has not been stored in any of the content distribution devices 1 and the high-speed distribution devices 2 is requested, the content distribution device 1 acquires the content from the content distributing server device 4. The content distribution device 1 decodes the acquired content (a file thereof) and re-encodes the content in a predetermined encoding format, to distribute the re-encoded contents sequentially. The reason why the content distribution device 1 re-encodes the content is to decrease the file size of the original motion picture content so that as many motion picture contents as possible can be stored in a limited memory capacity, and to suppress the data amount flowing in the network at the time of distributing the motion picture content. So that as many users as possible can use the motion picture content, even if access concentration to the motion picture content occurs, a telecommunications carrier reduces the data amount of the motion picture content to a degree that it cannot be seen by a user, and stores the motion picture content in the content distribution device 1. Moreover, once the re-encoded content is stored in the content distribution device 1, if there is an access request to the content again, the content can be distributed from the content distribution device 1. Consequently, the data amount flowing in the communication network can be reduced.

The high-speed distribution device 2 holds the motion picture content to which access is particularly concentrated, among the re-encoded motion picture contents stored in the content distribution device 1. The content distribution device 1 performs a re-encoding process having a high CPU load, and also a process of writing the re-encoded motion picture file in the memory unit 270. Consequently, the content distribution device 1 cannot correspond to high speed distribution at the time of access concentration. Therefore, the content to which access concentration has occurred is arranged in the high-speed distribution device 2, and the high-speed distribution device 2 exclusively performs distribution of the motion picture content. For example, several contents are arranged in the high-speed distribution device 2. If too many contents are arranged in the high-speed distribution device 2, disk search occurs at the time of reading the motion picture content, and distribution is delayed. If the number of contents to be arranged in the high-speed distribution device 2 is small, once the content accessed from the memory unit 270 has been read out, data of the content is present on the memory for a while. Consequently, if there is a next access request for the content on the memory in this state, the motion picture content may be able to be distributed without accessing a disk. As a result, it is suitable for high speed distribution. The motion picture content held by the high-speed distribution device 2 may be motion picture data re-encoded by the content distribution device 1 based on the terminal information. Being re-encoded based on the terminal information means to read an encoding format, for example, corresponding to the specifications of the respective terminals preset for each terminal information, from the memory unit 170 by the content distribution device 1, to re-encode the motion picture data in the encoding format.

In the respective content distribution devices 1, the motion picture data not stored in other content distribution devices 1 is stored. The motion picture contents selected from these according to the number of accesses during a predetermined time are stored in the high-speed distribution device 2. The content storage location determination unit 320 of the management device 3 determines the device in which to arrange the content, among the plurality of content distribution devices 1 and the plurality of high-speed distribution devices 2. A content distribution system 7 includes a large number of content distribution devices 1, and includes a comparatively small number of high-speed distribution devices 2. That is to say, the number of the content distribution devices 1 may be larger than the number of the high-speed distribution devices 2. The number of content distribution devices 1 and the number of high-speed distribution devices 2 can be increased according to the situation of the access request.

According to the present exemplary embodiment, in the system that performs processes having different processing cost such as the re-encoding process and the distribution process in parallel, only distribution of contents having high access frequency is separated to the high-speed distribution device 2. By this configuration, according to the present exemplary embodiment, for example, the servers the number of which is less than that for the system configured only by content distribution devices 1, can be made to correspond to the same amount of accesses.

The management device 3 manages information indicating the number of accesses and in which device (the content distribution device 1 or the high-speed distribution device 2) the content is stored, for each motion picture content and for each of the terminal information of the access source. Moreover, the management device 3 redirects a request from the user terminal device 6 to an appropriate content distribution device 1 or the like based on these pieces of the management information. The reason for taking the terminal information of the access source into consideration is that the motion picture data to be distributed may be different depending on the access source device.

A case where the content requested from the user terminal device 6 has not yet been stored in any device is described. In this case, the management device 3 determines in which content distribution device 1 the requested content (motion picture) is to be stored. Moreover, the management device 3 instructs the determined content distribution device 1 to acquire the content and re-encode the content. The content distribution device 1 that stores the new content may be determined so that, for example, the number of motion picture files and the data size thereof stored in respective content distribution devices 1 are equalized. The content distribution device 1 that stores the new content may be determined so that accesses to the respective content distribution devices 1 are equalized based on the sum total of the number of accesses to the respective content distribution devices 1 in a predetermined time.

The management device 3 may manage the last access time for each of the motion picture contents. In this case, the management device 3 may transmit instruction information instructing to delete the content, for example, after a predetermined time has passed since the last access thereto, to the content distribution device 1 that stores the content.

The management device 3 may instruct the content distribution device 1 to re-encode and accumulate only the motion picture content that has been accessed more than a predetermined number of times during a predetermined time, and may set so that the content having a small number of accesses does not pass through the content distribution device 1.

In this manner, the re-encoded motion picture contents are spread and arranged in the plurality of (large number of) content distribution devices 1 and the plurality of (small number of) high-speed distribution devices 2. By this configuration, according to the present exemplary embodiment, a distribution system having a performance equal to that of a distribution system including a huge storage device can be constructed at a comparatively low cost.

Particularly, by arranging the small number of contents having a high access frequency in the high-speed distribution device 2, access concentration can be handled without limitation on the distribution performance due to the limitation on the data transfer rate between the distribution server device 12 and the storage device 13, which becomes a bottleneck in the system using the storage device.

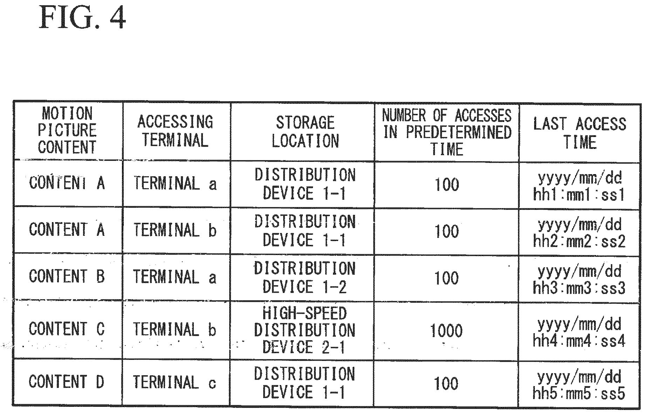

FIG. 4 shows an example of a table to be used by the management device 3 according to the present exemplary embodiment.

The values stored in the column of "motion picture content" in FIG. 4 are identification information of the re-encoded motion picture content stored in the content distribution device 1 or the high-speed distribution device 2. The values stored in the column of "accessing terminal" are terminal information of the user terminal device 6 that requests the motion picture. The values stored in the column of "storage location" are identification information of the device that stores the motion picture content. The values stored in the column of "number of accesses in predetermined time" indicate the number of accesses to the content in the predetermined time. The predetermined time is, for example, 10 minutes. The values stored in the column of "last access time" are the time when the motion picture content indicated by the line in the column of "motion picture content" was last accessed.

The access reception unit 310 of the management device 3 specifies the requested motion picture from request information from the user terminal device 6, and reads out the storage location of the motion picture from the table exemplified in FIG. 4. Moreover, the access reception unit 310 counts up by 1 the value in the column of "number of accesses" of the requested motion picture, and updates the value in the column of "last access time" to the time when the request has been received.

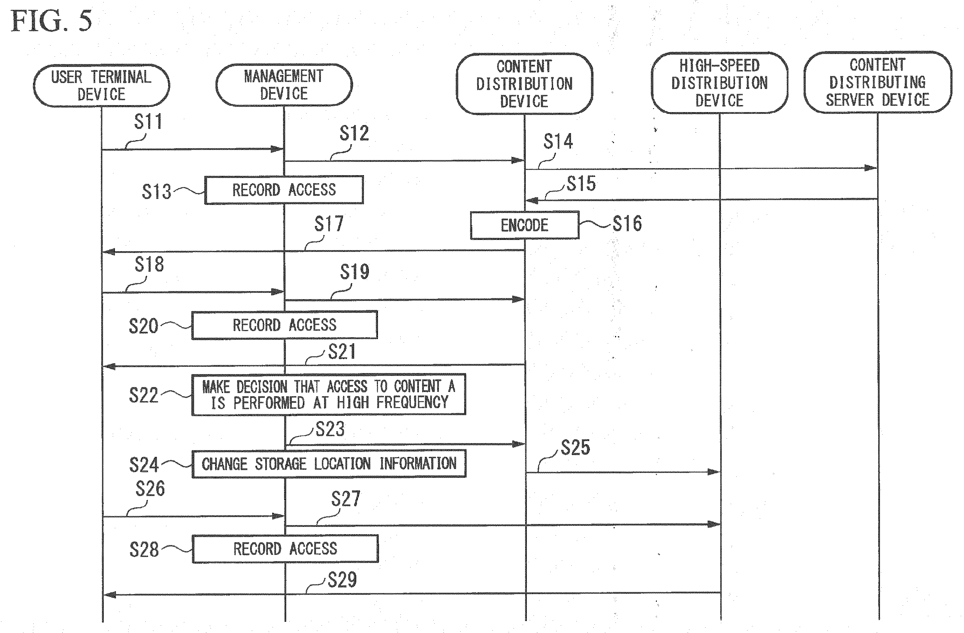

FIG. 5 shows a process flow of the content distribution device 1 according to the present exemplary embodiment.

A process of distributing the motion picture content by the content distribution device 1 and the high-speed distribution device 2 is described with reference to the process flow shown in FIG. 5.

At first, "content A" is requested from the user terminal device 6 (the terminal information of the user terminal device 6 is defined as "terminal a") (step S11: access to content A). The access reception unit 310 of the management device 3 reads out the table stored in the memory unit 370 exemplified in FIG. 4 to search for the storage location of the "content A". It is assumed that the "content A" has not yet been recorded in the table exemplified in FIG. 4.

The access reception unit 310 outputs information indicating that the "content A'' has not been registered, to the content storage location determination unit 320. Then, the content storage location determination unit 320 specifies, for example, the content distribution device 1 having the smallest total of the data size of the stored motion picture contents, of the content distribution device 1 having the smallest number of motion picture distributions. In order to specify such a content distribution device 1, the content storage location determination unit 320 may acquire the total size of the already stored motion picture data from the respective content distribution devices 1 and compare these sizes. As another method, the content storage location determination unit 320 may calculate an access concentration ratio or the like for each content distribution device 1, based on the information in the table exemplified in FIG. 4. The content storage location determination unit 320 outputs the identification information of the specified content distribution device 1 to the access reception unit 310. It is assumed that the identification information of the specified content distribution device 1 is "content distribution device 1-1". In this case, the access reception unit 310 redirects the received request to the specified content distribution device 1-1 (step S12: redirect to content distribution device 1-1). Moreover, the access reception unit 310 adds a new record (access information) to the table in FIG. 4. Furthermore, the access reception unit 310 records, in the added record, "content A" in the column of motion picture content, "terminal a" in the column of accessing terminal, "content distribution device 1-1" in the column of storage location, "1" in the column of number of accesses in the predetermined time, and the time when the request has been received in the column of access time (step S13: record access).

In the content distribution device 1-1, the content acquisition unit 110 accesses the content distributing server device 4 from a URL provided in the request information (step S14: access to content distributor), to acquire the motion picture content (step S15: acquire content). The encoding unit 120 re-encodes the acquired motion picture content, and writes the re-encoded motion picture content in the memory unit 270 (step S16: encode). The content distribution unit 130 distributes the re-encoded motion picture data to the user terminal device 6, being the access request source, in parallel to the re-encoding process performed by the encoding unit 120 (step S17: distribute content).

Next it is assumed that the user terminal device 6 again requests access to the "content A" (step S18: access to content A). At this time, the user terminal device 6 may be the same terminal device as the terminal device that has requested access to the "content A" in step S 11 described above, or may be an other user terminal device 6 classified in the same terminal type as that terminal device. In the management device 3, the access reception unit 310 reads out the information of the "content distribution device 1-1", being the storage location, by using the identification information of the motion picture content ("content A") and the terminal information ("terminal a") of the user terminal device 6 from the table exemplified in FIG. 4, and redirects the received request to the content distribution device 1-1 (step S19: redirect to content distribution device 1-1). Moreover, the access reception unit 310 adds "1" to the number of accesses to the read record, and updates the last access time (step S20: record access). In the content distribution device 1-1, being the redirect destination, the content distribution unit 230 reads out the re-encoded data of "content A" from the memory unit 270, and distributes the data to the user terminal device 6 (step S21: distribute content).

Subsequently, it is assumed that there are many accesses to the "content A" from a plurality of user terminal devices 6 classified in the same terminal type as the terminal device that has requested access to the "content A" in step S11 described above. As a result, it is assumed that the number of accesses to the "content A" in the predetermined time, accessed from the "terminal a" in the table exemplified in FIG. 4 exceeds the threshold for determining that access to the content is performed at a particularly high frequency. The content storage location determination unit 320 then makes a decision that the re-encoded motion picture content corresponding to the combination of "content A" and "terminal a" is a motion picture content having a particularly high access frequency (step S22: make a decision that access to content A is performed at high frequency). According to the decision, the content storage location determination unit 320 transmits instruction information to the content distribution device 1-1 so as to arrange the motion picture content having a high access frequency in the high-speed distribution device ("high-speed distribution device 2-1") (step S23: instruct arrangement change of content A). Then the content storage location determination unit 320 rewrites the value of the column of "storage location" in a record in which the value of the column of "motion picture content" is content A and the value of the column of "accessing terminal" is terminal a in the table exemplified in FIG. 4, from "content distribution device 1-1" to "high-speed distribution device 2-1" (step S24: change storage location information).

On the other hand, in the content distribution device 1-1 that has received the instruction information of arrangement change of the content, the content transfer unit 140 reads out the motion picture file from the memory unit 270, and transmits a duplicate of the motion picture file to the high-speed distribution device 2-1 (step S25: duplicate content A).

Next, it is assumed that the user terminal device 6 again requests access to the "content A" (step S26: access to content A). The access reception unit 310 reads out the information of the "high-speed distribution device 2-1", being the storage location, from the memory unit 370, and redirects the received request to the high-speed distribution device 2-1 (step S27: redirect to high-speed distribution device 2-1). Moreover, the access reception unit 310 adds "1" to the number of accesses to the read record, and updates the last access time (step S28: record access). The high-speed distribution device 2-1, being the redirect destination, reads out the encoded data of "content A" from the memory unit 270, and distributes the data to the user terminal device 6 (step S29: distribute content).

Accordingly, the process flow is complete.

When determined that the number of accesses to the "content A" in the above example has decreased and the number of accesses to a "content B" has exceeded a predetermined threshold, the content storage location determination unit 320 transmits delete instruction information of the content A, to the high-speed distribution device 2-1, and transmits transfer instruction information of the content B to the high-speed distribution device 2-1, to a content distribution device 1-2. In the high-speed distribution device 2-1, the content acquisition unit 210 deletes the content A, and acquires the content B transferred (duplicated) from the content distribution device 1-2.

Moreover, when determining that there is a motion picture content not accessed for a predetermined time or more by the respective distribution devices, by referring to the "last access time" in the table exemplified in FIG. 4, the content storage location determination unit 320 may transmit the delete instruction information of the content, to the content distribution device 1 that stores the content, and the content transfer unit 140 may delete the motion picture data of the content.

The content storage location determination unit 320 determines an upper limit of the number of motion picture contents to be continuously stored in the high-speed distribution device 2, according to a predetermined method so that the number of accesses to a disk for reading out the content by the OS of the high-speed distribution device 2 does not increase. For example, the content storage location determination unit 320 may determine the contents so that the number of contents to be stored in the high-speed distribution device 2 is within a predetermined number in order of high access frequency. As another method, the content storage location determination unit 320 may determine the contents to be stored so that a total value of the data size of the contents added in order from the content having the larger number of accesses becomes a predetermined data size. As another method, the content storage location determination unit 320 may determine so that the contents having a predetermined number of accesses or more are stored.

According to the present exemplary embodiment, it is configured such that the motion picture contents are arranged in the content distribution device 1 and the high-speed distribution device 2 according to the access frequency, so as to be able to respond to requests, even if requests from the user concentrate. The respective motion picture files are spread over the respective distribution devices and arranged, thereby spreading the access load. Particularly, by carefully selecting the content on which access concentrates and arranging the content in the high-speed distribution device 2, there is no occurrence of a problem where a data transfer band between the distribution server device and the storage device becomes insufficient at the time of access concentration when the motion picture file is stored in the storage device. Generally, a storage device having a large memory capacity and fast data transfer rate is likely to be expensive. The present distribution system can be constructed by only an inexpensive server device, and can realize a distribution performance the same as that of a distribution system including a high-performance storage device, at low cost.

The data amount of the motion picture content stored in the respective distribution devices is reduced by the re-encoding process. Consequently, even if many distribution requests have been received, the data amount flowing in the network can be reduced by a value calculated by multiplying the reduced data amount by the number of requests.

The above-described content distribution device 1 includes a computer therein. The respective processes of the above-described content distribution device 1 are memorized on a computer readable recording medium. The program is read and executed by the computer to perform the above processes. The computer readable recording medium stands for a magnetic disk, a magneto-optical disk, a CD-ROM, a DVD-ROM, a semiconductor memory unit, or the like. The computer program may be distributed to the computer by a communication line, and the computer having received distribution thereof may execute the program.

The program may realize a part of the functions described above. The program may be a so-called difference file (a difference program) that can realize the functions described above, in combination with a program recorded beforehand in the computer system.

The constituent elements in the above-described exemplary embodiments can be appropriately replaced by well-known constituent elements without departing from the scope of the present invention. For example, the motion picture data may be voice data or image data of a still image. Moreover, the technical scope of the present invention is not limited to the exemplary embodiments described above, and various changes may be added without departing from the scope of the present invention.

A part or the entire exemplary embodiments described above can be described as in the supplementary notes below, but not limited thereto.

### (Supplementary note 1)

A content distribution device including: a content acquisition unit that acquires a content to be accessed based on a access request transmitted from an access request source, the content to be accessed being indicated by the access request; an encoding unit that encodes the acquired content; a content distribution unit that distributes the encoded content to the access request source; and a content transfer unit that transfers the encoded content to a high-speed distribution device in a case where access frequency to the encoded content is higher than a threshold, the high-speed distribution device exclusively distributing a content and being independent of the content distribution device.

### (Supplementary note 2)

The content distribution device according to supplementary note 1, wherein the encoding unit encodes, using an encoding method having a second compression rate, a content that has been encoded using an encoding method having a first compression rate, to generate the encoded content, the second compression rate being higher than the first compression rate.

### (Supplementary note 3)

The content distribution device according to supplementary note 2, wherein the content that has been encoded using the encoding method having the first compression rate is a motion picture, a still image, or voice data.

### (Supplementary note 4)

The content distribution device according to any one of supplementary notes 1 to 3, wherein the content acquisition unit acquires a plurality of contents, the encoding unit encodes the acquired plurality of contents, and the content distribution unit sequentially distributes the encoded plurality of contents.

### (Supplementary note 5)

The content distribution device according to any one of supplementary notes 1 to 4, further including: a memory unit that accumulates the encoded content, wherein the content distribution unit reads out the encoded content from the memory unit and distributes the encoded content.

### (Supplementary note 6)

A content distribution system including: a content distribution device; and a high-speed distribution device that exclusively distributes a content and is independent of the content distribution device, the content distribution device including: a content acquisition unit that acquires a content to be accessed based on a access request transmitted from an access request source, the content to be accessed being indicated by the access request; an encoding unit that encodes the acquired content; a content distribution unit that distributes the encoded content to the access request source; and a content transfer unit that transfers the encoded content to the high-speed distribution device in a case where access frequency to the encoded content is higher than a threshold, the high-speed distribution device distributing the encoded content transferred from the content distribution device.

### (Supplementary note 7)

The content distribution system according to supplementary note 6, wherein the content distribution device includes a plurality of contents distribution devices.

### (Supplementary note 8)

The content distribution system according to supplementary note 6 or 7, wherein the high-speed distribution device includes a plurality of high-speed distribution devices.

### (Supplementary note 9)

The content distribution system according to supplementary note 6, further including: a management device that determines in which of a plurality of content distribution devices included in the content distribution device a content is to be encoded, the management device recording access information regarding access to a content for each content and each terminal information of access request sources, the management device specifying a content having a high access frequency based on the access information, the management device determining to distribute the specified content from the high-speed distribution device.

### (Supplementary note 10)

The content distribution system according to supplementary note 9, wherein the management device includes a plurality of management devices.

### (Supplementary note 11)

The content distribution system according to supplementary note 9, wherein the management device changes a content having a high access frequency according to the number of accesses within a predetermined time.

### (Supplementary note 12)

The content distribution system according to supplementary note 9 or supplementary note 11, wherein the management device determines an upper limit of the number of contents to be stored in the high-speed distribution device, by using at least one value of a total of the number of contents or data size of the contents, and the number of accesses.

### (Supplementary note 13)

A content distribution method including: acquiring a content to be accessed based on a access request transmitted from an access request source, the content to be accessed being indicated by the access request; encoding the acquired content; distributing the encoded content to the access request source; and transferring the encoded content to a high-speed distribution device in a case where access frequency to the encoded content is higher than a threshold, the high-speed distribution device exclusively distributing a content and being independent of the content distribution device.

### (Supplementary note 14)

A program that causes a computer of a content distribution device to execute: acquiring a content to be accessed based on a access request transmitted from an access request source, the content to be accessed being indicated by the access request; encoding the acquired content; distributing the encoded content to the access request source; and transferring the encoded content to a high-speed distribution device in a case where access frequency to the encoded content is higher than a threshold, the high-speed distribution device exclusively distributing a content and being independent of the content distribution device.

This application is based upon and claims the benefit of priority from the prior Japanese Patent Application No. 2013-266738, filed on December 25th, 2013, the disclosure of which is incorporated herein in its entirety by reference.

### INDUSTRIAL APPLICABILITY

The present invention may be applied to a cache management device, a cache management method, and a program.

### Reference Symbols

- 1: Distribution device
- 2: High-speed distribution device
- 3: Management device
- 4: Content distributing server device
- 5: Communication network
- 6: User terminal device
- 7: Content distribution system
- 12: Distribution server device
- 13: Storage device
- 14: Encoder device
- 110: Content acquisition unit
- 120: Encoding unit
- 130: Content distribution unit
- 140: Content transfer unit
- 160: Communication unit
- 170: Memory unit
- 210: Content acquisition unit
- 230: Content distribution unit
- 260: Communication unit
- 270: Memory unit
- 310: Access reception unit
- 320: Content storage location determination unit
- 360: Communication unit
- 370: Memory unit

## Claims

1. A content distribution device comprising:
a content acquisition unit that acquires a content to be accessed based on a access request transmitted from an access request source, the content to be accessed being indicated by the access request;
an encoding unit that encodes the acquired content;
a content distribution unit that distributes the encoded content to the access request source; and
a content transfer unit that transfers the encoded content to a high-speed distribution device in a case where access frequency to the encoded content is higher than a threshold, the high-speed distribution device exclusively distributing a content and being independent of the content distribution device.

2. The content distribution device according to claim 1, wherein the encoding unit encodes, using an encoding method having a second compression rate, a content that has been encoded using an encoding method having a first compression rate, to generate the encoded content, the second compression rate being higher than the first compression rate.

3. The content distribution device according to claim 2, wherein the content that has been encoded using the encoding method having the first compression rate is a motion picture, a still image, or voice data.

4. The content distribution device according to any one of claims 1 to 3, further comprising:
a memory unit that accumulates the encoded content,
wherein the content distribution unit reads out the encoded content from the memory unit and distributes the encoded content.

5. A content distribution system comprising:
a content distribution device; and
a high-speed distribution device that exclusively distributes a content and is independent of the content distribution device,
the content distribution device including:
a content acquisition unit that acquires a content to be accessed based on a access request transmitted from an access request source, the content to be accessed being indicated by the access request;
an encoding unit that encodes the acquired content;
a content distribution unit that distributes the encoded content to the access request source; and
a content transfer unit that transfers the encoded content to the high-speed distribution device in a case where access frequency to the encoded content is higher than a threshold,
the high-speed distribution device distributing the encoded content transferred from the content distribution device.

6. The content distribution system according to claim 5, further comprising:
a management device that determines in which of a plurality of content distribution devices included in the content distribution device a content is to be encoded, the management device recording access information regarding access to a content for each content and each terminal information of access request sources, the management device specifying a content having a high access frequency based on the access information, the management device determining to distribute the specified content from the high-speed distribution device.

7. The content distribution system according to claim 6, wherein the management device changes a content having a high access frequency according to the number of accesses within a predetermined time.

8. The content distribution system according to claim 6 or 7, wherein the management device determines an upper limit of the number of contents to be stored in the high-speed distribution device, by using at least one value of a total of the number of contents or data size of the contents, and the number of accesses.

9. A content distribution method comprising:
acquiring a content to be accessed based on a access request transmitted from an access request source, the content to be accessed being indicated by the access request;
encoding the acquired content;
distributing the encoded content to the access request source; and
transferring the encoded content to a high-speed distribution device in a case where access frequency to the encoded content is higher than a threshold, the high-speed distribution device exclusively distributing a content and being independent of the content distribution device.

10. A program that causes a computer of a content distribution device to execute:
acquiring a content to be accessed based on a access request transmitted from an access request source, the content to be accessed being indicated by the access request;
encoding the acquired content;
distributing the encoded content to the access request source; and
transferring the encoded content to a high-speed distribution device in a case where access frequency to the encoded content is higher than a threshold, the high-speed distribution device exclusively distributing a content and being independent of the content distribution device.
